# EUROPÄISCHE PATENTSCHRIFT

(11) **EP 3 749 249 B1**
(45) Veröffentlichungstag und Bekanntmachung des Hinweises auf die Patenterteilung: **07.06.2023**
(21) Anmeldenummer: 18839808.5
(22) Anmeldetag: 21.12.2018
(51) Int. Cl.: A61C 8/00

(54) **KNOCHEN-IMPLANTAT MIT EINEM VERANKERUNGSTEIL AUS EINEM BIOKOMPATIBLEN KUNSTSTOFF**
BONE IMPLANT HAVING AN ANCHORING PART MADE OF A BIOCOMPATIBLE PLASTIC
IMPLANT OSSEUX COMPRENANT UNE PARTIE D'ANCRAGE CONSTITUÉE D'UNE MATIÈRE PLASTIQUE BIOCOMPATIBLE

(30) Priorität: 28.12.2017 DE 102017012134
(43) Veröffentlichungstag der Anmeldung: 16.12.2020
(73) Patentinhaber: Petrovic, Ljubinko, 4500 Solothurn (CH)
(72) Erfinder: Petrovic, Ljubinko, 4500 Solothurn (CH)
(74) Vertreter: Dorn, Dietmar
(86) Internationale Anmeldenummer: PCT/DE2018/101038
(87) Internationale Veröffentlichungsnummer: WO 2019/129324

(56) Entgegenhaltungen:
- WO-A1-2011/038915
- US-A1- 2006 246 397
- US-A1- 2010 145 393
- US-A1- 2015 164 619
- US-A1- 2016 317 712

## Beschreibung

Die Erfindung beschreibt ein Knochen-, insbesondere ein Dental-, Implantat, mit einem Verankerungsteil aus einem ersten, biokompatiblen Kunststoff und einem Aufbauteil, wobei das im Grunde zylinder- oder kegelstumpfförmige Verankerungsteil einen ersten Abschnitt aufweist, der dazu ausgebildet ist in den Knochen, insbesondere in den menschlichen Kiefer-Knochen, implantiert zu werden.

Beispielhaft aus der EP 2 829 250 B1 ist der Aufbau eines gattungsgemäßen zweiteiligen Implantats grundsätzlich bekannt. Aus der EP 1 825 830 B1 ist beispielhaft ein zweiteiliges Implantat aus Keramik zur Verankerung von künstlichen Zähnen bekannt, wobei das Implantat in eine Knochenkontaktflache und eine Weichgewebekontaktfläche unterteilt ist, wobei die Knochenkontaktflache und die Weichgewebekontaktfläche aufgeraut sind und hydroxyliert durch Hydroxygruppen, welche in der äußersten atomaren Schicht der Implantatoberfläche vorhanden sind, und hydrophil sind, wobei das ganze Implantat in derselben Art und Weise behandelt worden ist.

Aus der DE 103 34 366 A1 ist ein Zahnimplantat mit einem Grundkörper oder einer Komponente bekannt, wobei der Grundkörper oder die Komponente für das Zahnimplantat aus einem nicht-metallischen Werkstoff, insbesondere Kunststoff, insbesondere Polyetheretherketon oder dergleichen, gefertigten Kern aufweist und wobei der Kern der Komponente oder des Grundkörpers eine auf dem Kern fest haftende dünne metallhaltige Schicht aufweist.

Aus der DE 20 2014 004 751 U1 ist ein Implantat bekannt, bestehend aus einem länglichen, sich in Längsrichtung entlang einer Längsmittelachse erstreckenden Verankerungsabschnitt und einen Implantatstumpf, wobei das Implantat zumindest teilweise aus einem implantierbaren Material besteht, wobei der Verankerungsabschnitt einen länglichen Kern aufweist, von welchem in Längsrichtung und in Umfangsrichtung verteilt mehrere Verankerungskrallen grob nach radial außen ausgehen, wobei an einem gemeinsamen Kernquerschnitt am Kernumfang jeweils genau drei Verankerungskrallen angeordnet sind. Als implantierbares Material wird hier insbesondere Polyetheretherketon vorgeschlagen.

Die US 2010 / 0145393 A1 offenbart ein poröses PEEK-Implantatsystem, das das Einwachsen von Gewebe im gesamten Körper des Implantats ermöglichen kann. Das Implantat kann einen festen oder porösen PEEK-Kern umfassen. Die porösen PEEK-Implantate können von allgemeiner Form und Größe sein, bieten jedoch die Struktur, die zur Ausführung der Funktion des Implantats erforderlich ist. Die porösen PEEK-Implantatporen können mit Mitteln ausgebildet sein, um das Einwachsen von Gewebe zu fördern, sowie mit anderen Stoffen wie Antibiotika, Anästhetika, Analgetika und dergleichen.

Die US 2006 / 0246397 A1 offenbart ein Implantat, das eine Befestigungskomponente umfasst, die zum Einführen in einen Knochen vorgesehen ist, und mindestens eine weitere Abutmentkomponente zum Bereitstellen einer Basis für einen prothetischen Überbau und ein Verbindungselement zum mechanischen Sichern des Abutments an der Vorrichtung, wobei die Vorrichtung ein Außengewinde oder andere Vorsprünge zur Verbesserung des Eingriffs zwischen der Vorrichtung und dem Knochen umfasst, wobei das Verbindungselement die Vorrichtung abnehmbar mit dem Abutment verbindet und wobei mindestens die Vorrichtung und das Abutment aus nichtmetallischem Material bestehen.

Die WO 2011 / 038915 A1 offenbart ein Zahnimplantat aus nichtmetallischen Werkstoffen, beispielsweise Kunststoff oder Keramik, oder Titan mit einem Implantatkörper, der ein Haupt- und ein Mikrogewinde aufweist und der durch seine Außengeometrie eine bauchige Druckverteilung auf den umliegenden Knochen erzeugt.

Die US 2016 / 0317712 A1 offenbart ein Zahnimplantat umfassend eine Zusammensetzung, die ein Polymermaterial umfasst, das vorzugsweise Polyetheretherketon ist, und einen Apatit, beispielsweise einen hydroxyhaltigen Apatit. Eine prothetische Vorrichtung kann ein Zahnimplantat aus Polyetheretherketon, ein ebenfalls aus PEEK hergestelltes Abutment und eine Krone, die ebenfalls aus PEEK hergestellt ist, durch Bearbeitung aus einer PEEK-Scheibe umfassen.

Ausgehend von diesem Stand der Technik liegt der Erfindung die Aufgabe zugrunde, ein Implantat vorzustellen, das eine hervorragende Biokompatibilität kombiniert mit idealen physikalischen Eigenschaften und gleichzeitig weitgehend kompatibel ist zu bestehenden Implantatsystemen, insbesondere auf Basis von Titanimplantaten.

Diese Aufgabe wird erfindungsgemäß durch ein Knochen-, insbesondere Dental-Implantat mit den Merkmalen des Anspruchs 1 gelöst. Bevorzugte Ausführungsformen sind in den abhängigen Ansprüchen beschrieben.

Die Erfindung beschreibt ein Knochen-, insbesondere Dental- Implantat mit einem Verankerungsteil und einem Aufbauteil, wobei das Verankerungsteil einen im Grunde zylinder- oder kegelstumpfförmigen ersten Abschnitt mit einem Außengewinde aufweist, der dazu ausgebildet ist mittels einer Drehbewegung in einen Knochen implantiert zu werden, und einen zweiten Abschnitt aufweist, der dazu ausgebildet ist, im Bereich des Weichgewebes angeordnet zu werden, wobei der Verankerungsteil aus einem ersten, biokompatiblen Kunststoff, insbesondere aus Polyetheretherketon, ausgebildet ist und eine Ausnehmung aufweist, die von einer Deckfläche des zweiten Abschnitts ausgehend bis in den ersten Abschnitt hineinreichend ausgebildet ist und die in einem ersten Gewindeabschnitt ein Innengewinde aufweist, und wobei das Aufbauteil einen zweiten Gewindeabschnitt aufweist, der dazu ausgebildet ist, mit dem ersten Gewindeabschnitt verschraubt zu werden.

Es ist besonders vorteilhaft und im Rahmen der Erfindung explizit gewünscht, dass der beschriebene Verankerungsteil sowohl mit den fachüblichen Hilfsmitteln und Werkszeugen, wie sie insbesondere von Implantatsystemen auf Titanbasis bekannt sind, implantiert werden kann. Alternativ sollten die Modifikationen der Hilfsmittel oder Werkzeuge nur in geringem Umfang notwendig sein. Auch ist es explizit gewünscht, dass das Aufbauteil identisch dem fachüblichen ausgebildet sein kann. Diese Annährung an den fachüblichen Standard dient der vereinfachten Handhabung und Integration in bestehende Systeme, ohne deren Nachteile in Kauf nehmen zu müssen.

Unter dem Begriff "im Grunde zylinderförmig" soll verstanden werden, dass die Grundform zylindrisch ausgebildet ist und zwar notwendigerweise nur im ersten Abschnitt, der in den Knochen eingeschraubt wird. Der zweite Abschnitt kann unabhängig hiervon grundsätzlich auch eine im Vergleich zum ersten sehr geringe Längenausdehnung aufweisen, wodurch der Verankerungsteil fast vollständig im Kiefer-Knochen angeordnet werden kann. Der Begriff "kegelstumpfförmig" wird im Grunde analog verstanden, wobei auch Mischformen, also mit einem Übergang von einer zylinderförmigen Gestalt im Anschluss an den zweiten Abschnitt zu einer im weiteren Verlauf kegelstumpfförmigen Gestalt ebenso hierunter verstanden werden soll.

Die geometrischen Abmessungen und Ausgestaltungen des Außengewindes können hier grundsätzlich ähnlich oder sogar gleich dem vielfältigen Stand der Technik nachgebildet sein.

Der Werkstoff des Verankerungsteils besteht hier besonders bevorzugt explizit ausschließlich aus dem ersten, biokompatiblen Kunststoff in seiner Reinform oder in seiner Reinform mit Beimengungen zur Änderung der physikalischen Eigenschaften, insbesondere des Elastizitätsmoduls, ohne weitere Verstärkungen oder Beschichtungen.

Es kann besonders vorteilhaft sein, wenn erste Abschnitt des Verankerungsteils eine erste äußere raue Oberfläche aufweist, während der zweite Abschnitt des Verankerungsteils eine demgegenüber zweite glatte Oberfläche aufweist.

Hierbei kann die erste raue Oberfläche, vorzugsweise unregelmäßig, strukturiert ausgebildet sein, und vorzugsweise eine erste Rauheit Ra, gemäß DIN 4760, zwischen 1µm und 30µm, bevorzugt zwischen 3µm und 10µm aufweisen. Hierbei kann die Rauheit mittels Messmethoden nach EN ISO 25178 bestimmt werden.

Weiterhin kann die zweite glatte Oberfläche eine zweite Rauheit Ra kleiner als 1µm, bevorzugt kleiner als 0,2µm aufweisen.

Vorzugsweise ist das Aufbauteil aus einem metallischen oder aus einem keramischen Werkstoff oder aus einem Kunststoff, vorzugsweises aus Polyetheretherketon, oder aus einem Komposit aus mindestens zwei dieser Werkstoffe ausgebildet.

Besonders bevorzugt ist es, wenn der erste Kunststoff einen Elastizitätsmodul aufweist, der zwischen 3GPa und 18GPa, bevorzugt zwischen 10GPa und 15GPa, und insbesondere zwischen 11GPa und 13GPa beträgt. Dieser Kunststoff kann als thermoplaster Kunststoff ausgebildet sein, insbesondere aus Polyetheretherketon, insbesondere mit Beimengungen, die den Elastizitätsmodul erhöhen. Eine derartige Beimengung kann insbesondere aus Karbon bestehen. Es handelt sich hier jeweils um Beimengungen, die zu einem Kunststoffkörper, der vorzugsweise noch nicht die Form eines Verankerungsteils aufweist, führen, nicht um nachträgliche Modifikationen des Kunststoffkörpers. Die Herstellung des Verankerungsteils kann insbesondere bevorzugt mittels mechanischer Bearbeitung eines Kunststoffgrundkörpers erfolgen oder auch mittels typischer Kunststoffspritzverfahren und falls notwendig mechanischer Nachbearbeitung.

Grundsätzlich ist es vorteilhaft, wenn der erste Gewindeabschnitt dazu ausgebildet ist, mit dem zweiten Gewindeabschnitt kraft- und/oder stoffschlüssig verbunden zu sein. Hierbei kann zur stoffschlüssigen Verbindung zwischen dem ersten und zweiten Gewindeabschnitt ein adhäsiver Stoff zur stoffschlüssigen Verbindung angeordnet sein.

Ebenso grundsätzlich ist es vorteilhaft, wenn der erste Gewindeabschnitt entweder ausschließlich im Bereich des ersten Abschnitts angeordnet ist oder sowohl im Bereich des ersten wie auch des zweiten Abschnitts angeordnet ist.

Es kann, insbesondere abhängig vom Elastizitätsmodul des ersten Kunststoffs, vorteilhaft sein, wenn der erste Gewindeabschnitt bis zu einer Tiefe von mindestens 55%, bevorzugt von mindestens 65% und insbesondere bevorzugt von mindestens 75% der Länge des ersten Abschnitts in diesen hineinreicht. Eine derartige Ausgestaltung bedingt bevorzugt ein modifiziertes Hilfsmittel zur Implantation, insbesondere bei der Drehbewegung zur Implantation, gegenüber dem Stand der Technik. Insbesondere ist hier eine Anpassung an die Länge des Gewindeabschnitts notwendig.

Es kann bei einer derartigen Ausgestaltung des ersten Gewindeabschnitts vorteilhaft sein, wenn der erste Gewindeabschnitt dazu ausgebildet ist, nach der Implantation teilweise mit einem zweiten Kunststoff verfüllt zu werden. Abhängig von der Länge des ersten Gewindeabschnitts kann dieser nach der Implantation bis zu einer Füllhöhe von mindestens 20%, bevorzugt von mindestens 30% und insbesondere bevorzugt von mindestens 40%, verfüllt sein. Dieser Verfüllung erfolgt also nach der Implantation des Verankerungsteils im Knochen.

Weitere Erläuterungen der Erfindung, vorteilhafte Einzelheiten und Merkmale ergeben sich aus der nachfolgenden Beschreibung der in den Fig. 1 bis 4 dargestellten Ausführungsbeispiele der Erfindung oder von Teilen hiervon. Dabei zeigt:
Figur 1 zeigt ein zweiteiliges erfindungsgemäßes Dental-Implantat.
Figur 2 zeigt einen Schnitt durch ein Verankerungsteil einer ersten Ausgestaltung eines erfindungsgemäßen Dental-Implantats.
Figur 3 zeigt einen Schnitt durch ein Verankerungsteil einer zweiten Ausgestaltung eines erfindungsgemäßen Dental-Implantats
Figur 4 zeigt eine Modifikation des Verankerungsteils der zweiten Ausgestaltung.

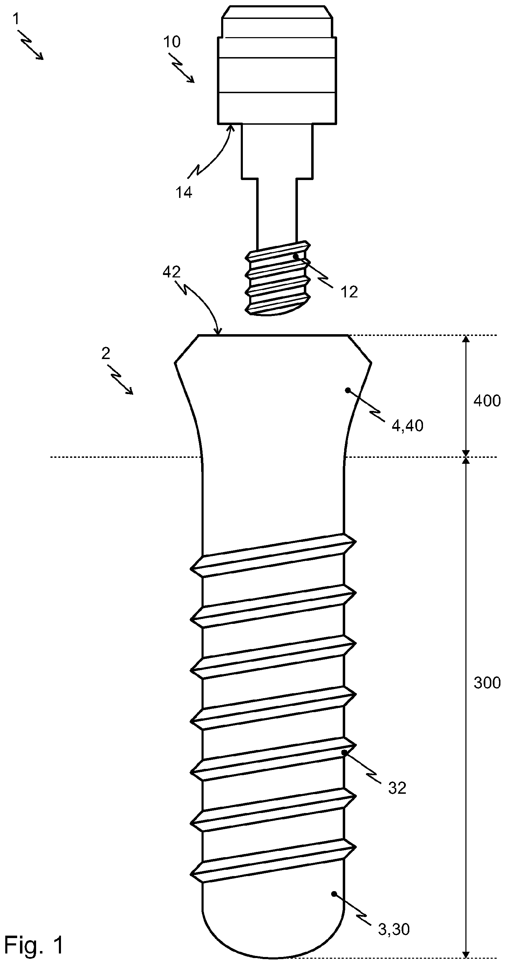

Figur 1 zeigt ein zweiteiliges erfindungsgemäßes Dental-Implantat 1. Dieses Dental-Implantat 1 weist einen Verankerungsteil 2 und einen Aufbauteil 10 auf. Der Verankerungsteil 2 besteht aus Polyetheretherketon mit Karbonverstärkungen und weist einen Elastizitätsmodul von 12 GPa auf, der somit sehr nahe an dem Elastizitätsmodul von Knochensubstanz liegt.

Der Verankerungsteil 2 ist dafür ausgebildet, teilweise im menschlichen Kiefer-Knochen implantiert zu werden. Hierzu weist der Verankerungsteil 2 einen ersten Abschnitt 3 mit einer ersten Länge 300 auf, der im Grund zylinderförmig ausgebildet ist und zumindest in einem Teilabschnitt ein Außengewinde 32 aufweist. Dieses ist hier fachüblich ausgebildet. Die gesamte erste Oberfläche 30 des ersten Abschnitts 3 des Verankerungsteils 2 weist eine raue Oberfläche mit einer Rauheit Ra von 5µm oder mindestens 5µm auf.

Der Verankerungsteil 2 weist weiterhin einen zweiten Abschnitt 4 mit einer zweiten Länge 400 auf, der dazu ausgebildet ist, im Bereich des Weichgewebes eines menschlichen Kiefers angeordnet zu werden. Dieser zweite Abschnitt 4 weist eine glatte zweite Oberfläche 40 mit einer Rauheit Ra von 0,8µm auf. Grundsätzlich kann die Länge 400 dieses zweiten Abschnitts 4 auch nur sehr gering sein im Verglich zur Länge 300 des ersten Abschnitts 3. In diesem Ausführungsbeispiel ist das Verhältnis der Längen von erstem zu zweiten Abschnitt im Bereich von 4:1. Dieses Verhältnis kann grundsätzlich bis zu 25:1 oder in bestimmten Anwendungsfällen auch darüber hinaus betragen.

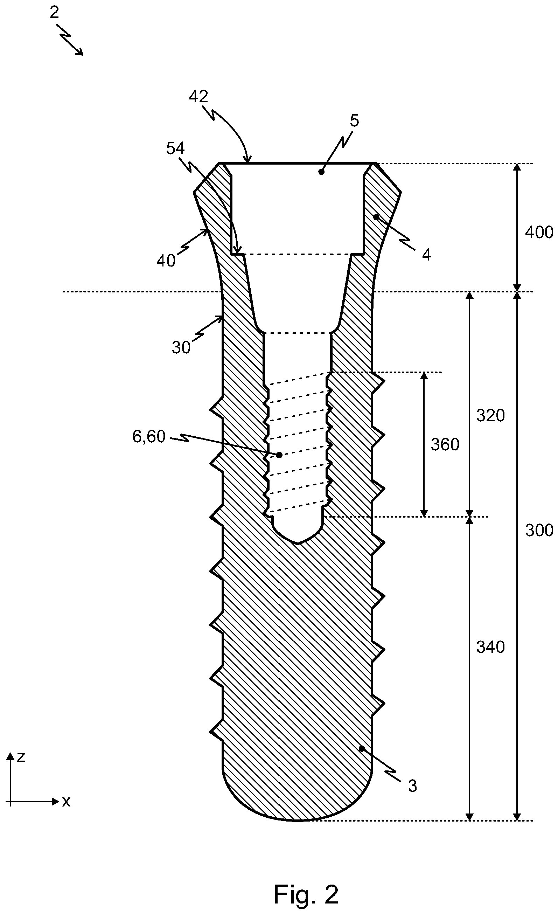

Der Verankerungsteil 2 weist, vgl. Figuren 2 bis 4, eine Ausnehmung auf 5, die von einer Deckfläche 42 des zweiten Abschnitts 4 ausgehend bis in den ersten Abschnitt 3 hineinreicht und einen ersten Gewindeabschnitt 6 mit einem Innengewinde 60 aufweist.

Dieses Innengewinde 60 des ersten Gewindeabschnitts 6 ist dazu ausgebildet, mit einem zweiten Gewindeabschnitt 12 des Aufbauteils 10 verschraubt zu werden und somit das Aufbauteil 10 mit dem Verankerungsteil 2 kraft- und, falls notwendig, zusätzlich stoffschlüssig zu verbinden.

Das Aufbauteil 10 kann grundsätzlich beliebig aus einem metallischen oder aus einem keramischen Werkstoff oder aus einem Kunststoff oder aus einem Komposit aus mindestens zwei dieser Werkstoffe ausgebildet sein. Nicht dargestellt, kann es auch bereits den künstlichen Zahn aufweisen.

Die äußere, insbesondere geometrische, Gestaltung des erfindungsgemäßen Zahnimplantats 1 dieses Ausführungsbeispiels ist im Grund identisch mit bereits bekannten Zahnimplantaten, gleichgültig ob diese aus einem keramischen oder einem metallischen Werkstoff bestehen.

Figur 2 zeigt einen Schnitt durch ein Verankerungsteils 2 einer ersten Ausgestaltung eines erfindungsgemäßen Dental-Implantats 1. Dieses Verankerungsteil 2 ist grundsätzlich in Bezug auf die äußere Ausgestaltung gleich aufgebaut demjenigen beschrieben in Figur 1.

Das Verankerungsteil 2 weist ausgehend von der Deckfläche 42 des zweiten Abschnitts 4 eine in den ersten Abschnitt 3 hineinreichende Ausnehmung 5 auf. Diese Ausnehmung 5 ist im Grunde fachüblich, hier sogar kompatibel zu bekannten Ausnehmungen von auf Titan basierenden Implantatsystemen, ausgebildet und reicht bis zur Mitte des ersten Abschnitts 3.

Dargestellt ist weiterhin ein erster Gewindeabschnitt 6 der Ausnehmung 5, wobei dieser erste Gewindeabschnitt 6 ein Innengewinde 60 aufweist. Die geometrische Ausgestaltung, also die reine Dimensionierung, ist im Rahmen des Ausführungsbeispiels identisch mit einer fachüblichen Ausgestaltung von Verankerungsteilen aus Titan. Der Gewindeabschnitt 6 liegt hierbei vollständig im ersten Abschnitt 3 des Verankerungsteils 2.

Die Tiefe 320 der Ausnehmung 5 bis zum Ende des Gewindeabschnitts 6 im ersten Abschnitt 3 beträgt hier weniger als 50% der Gesamtlänge 300 des ersten Abschnitts 3, wobei der Gewindeabschnitt 6 bis annährend an das Ende der Ausnehmung 5 heran reicht. Somit weist der verbleibende Teilabschnitt des ersten Abschnitts 3, jenseits des Gewindeabschnitts 6 eine Länge 340 auf, die größer ist als die Länge 320 des Teilabschnitts des ersten Abschnitts 3 bis zum Ende des Gewindeabschnitts 6. Die Länge 360 des ersten Gewindeabschnitts 6 ist hier geringer als die Tiefe 320 der Ausnehmung 5 bis zum Ende des Gewindeabschnitts 6, wodurch der Gewindeabschnitt 6 vollständig im ersten Abschnitt 3 der Verankerungsteils 2 angeordnet ist.

Die Ausnehmung 5 weist im Rahmen des Ausführungsbeispiels eine erste Auflagefläche 54 auf, die mit einer zweiten Auflagefläche 14 des Aufbauteils 10, vgl. Figur 1, korrespondiert. Es liegen somit nach der Verbindung des Aufbauteils 10 mit dem Verankerungsteil 2 die beiden Auflageflächen 14, 54, zumindest teilweise aufeinander.

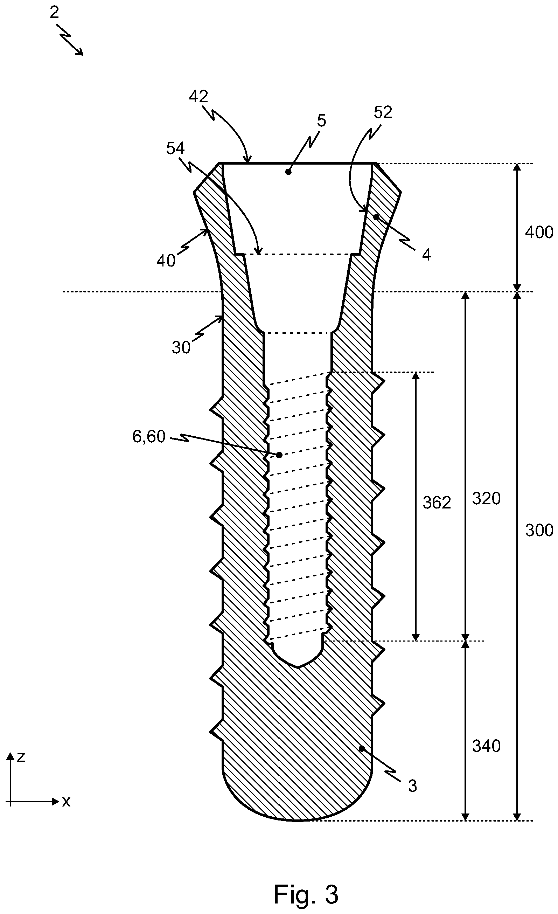

Figur 3 zeigt einen Schnitt durch ein Verankerungsteil 2 einer zweiten Ausgestaltung eines erfindungsgemäßen Dental-Implantats 1. Das Verankerungsteil 2 weist den gleichen Werkstoff mit der gleichen Oberflächenbeschaffenheit auf wie dasjenige gemäß der ersten Ausgestaltung auf.

Im Gegensatz zur ersten Ausgestaltung ist bei dieser zweiten Ausgestaltung die Ausnehmung 5 tiefer ausgebildet und weist in ihrem Verlauf innerhalb des zweiten Abschnitts eine Seitenfläche 52 mit konischem Verlauf mit einem Konuswinkel von ca. 5 Grad auf.

Hiervon grundsätzlich unabhängig ist die größere Tiefe der Ausnehmung 5 im ersten Abschnitt 3, wobei auch hier der Gewindeabschnitt 6 wiederum bis annährend an das Ende der Ausnehmung 5 heran reicht. Diese Ausgestaltung ist besonders vorteilhaft, da hierdurch das, nicht dargestellte, Hilfsmittel zur Verankerung des Verankerungsteils 2 weiter in den ersten Abschnitt 3 eingreifen kann. Hierfür ist ein gegenüber dem Stand der Technik modifiziertes Hilfsmittel mit längerem Gewindeabschnitt notwendig. Mittels dieses Hilfsmittels kann die die Kraftübertragung über das Innengewinde 60 des Gewindeabschnitts 6 auf einer größeren Länge des Verankerungsteils 2 erfolgen, verglichen mit der ersten Ausgestaltung gemäß Figur 2. Das Verankerungsteil 2 wird hierbei fachüblich mittels des Hilfsmittels in einer Drehbewegung in den Knochen eingebracht, wobei das Außengewinde 32 in ein vorteilhafter Weise bereits vorgeformtes Innengewinde des Knochens eingedreht wird. Diese Ausgestaltung ist besonders vorteilhaft, insbesondere da der Elastizitätsmodul des Verankerungsteils 2 fast eine Größenordnung geringer ist im Vergleich zu Verankerungsteilen aus Titan.

Die Tiefe 320 der Ausnehmung 5 bis zum Ende des Gewindeabschnitts 6 im ersten Abschnitt 3 beträgt hier weniger ca. 75% der Gesamtlänge 300 des ersten Abschnitts 3. Das Innengewinde 60 weist hier im Vergleich zur ersten Ausgestaltung eine Länge 362 auf, die ca. das Doppelte der Länge 360 der ersten Ausgestaltung beträgt. Somit weist der verbleibende Teilabschnitt des ersten Abschnitts 3, jenseits des Gewindeabschnitts eine Länge 340 auf, die ca. 25% der Länge des Teilabschnitts des ersten Abschnitts 3 bis zum Ende des Gewindeabschnitts 60 beträgt.

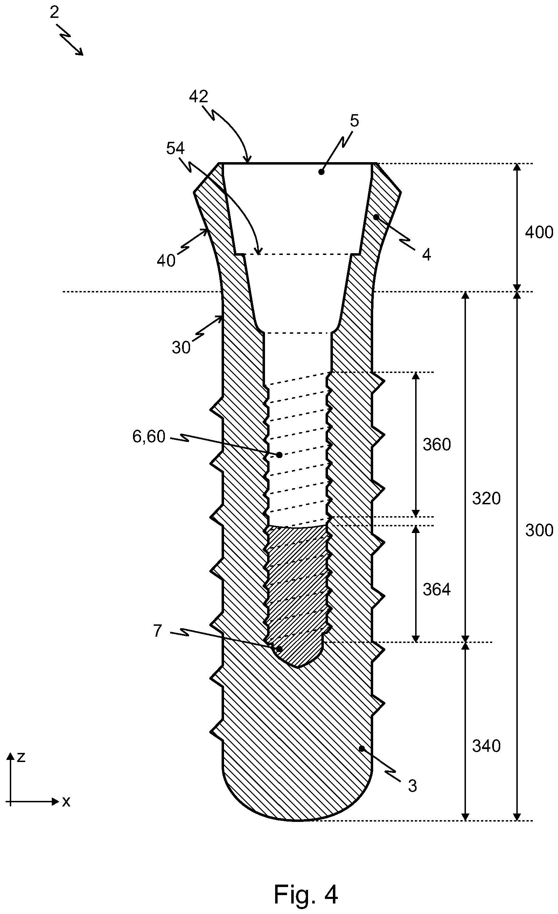

Figur 4 zeigt eine Modifikation des Verankerungsteils 2 der zweiten Ausgestaltung. Hierbei wurde nach der Implantation des Verankerungsteils 2 die Ausnehmung 5 teilweise aufgefüllt. In dieser Ausgestaltung ist die Ausnehmung 5 mit einem fachüblichen UV-härtenden, zweiten Kunststoff 7 teilweise gefüllt. Die Füllhöhe 364 vom Ende des Gewindeabschnitts 6 an ist derart bemessen, dass der verbleibende, nicht verfüllte Gewindeabschnitt eine Länge aufweist, die genau oder mindestens derjenigen Länge 360 gemäß dem Stand der Technik, gemäß der ersten Ausgestaltung, aufweist. In dieser Ausgestaltung wurde der Gewindeabschnitt 6 zu ca. 40% mit dem zweiten Kunststoff 7 verfüllt.

Durch das Auffüllen wird die Festigkeit des Verankerungsteils 2 gemäß dieser Ausgestaltung mit ursprünglich, also vor der Implantation, tieferer Ausnehmung 5 an diejenige gemäß der ersten Ausgestaltung angeglichen.

## Patentansprüche

1. Knochen-Implantat (1) mit einem Verankerungsteil (2) und einem Aufbauteil (10), wobei das Verankerungsteil (2) einen im Grunde zylinder- oder kegelstumpfförmigen ersten Abschnitt (3) mit einem Außengewinde (32) aufweist, der dazu ausgebildet ist, mittels einer Drehbewegung in einen Knochen implantiert zu werden, und einen zweiten Abschnitt (4) aufweist, der dazu ausgebildet ist, im Bereich des Weichgewebes angeordnet zu werden, wobei der Verankerungsteil (2) aus einem ersten, biokompatiblen Kunststoff, insbesondere aus Polyetheretherketon, ausgebildet ist und eine Ausnehmung (5) aufweist, die von einer Deckfläche (42) des zweiten Abschnitts (4) ausgehend bis in den ersten Abschnitt (3) hineinreichend ausgebildet ist und die in einem ersten Gewindeabschnitt (6), der ausschließlich im Bereich des ersten Abschnitts (3) angeordnet ist, ein Innengewinde (60) aufweist und wobei das Aufbauteil (10) einen zweiten Gewindeabschnitt (12) aufweist, der dazu ausgebildet ist, mit dem ersten Gewindeabschnitt (6) kraftschlüssig oder nur mittelbar mittels eines adhäsiven Stoffs stoffschlüssig verschraubt und somit verbunden zu werden.

2. Implantat nach Anspruch 1, wobei
der erste Abschnitt (3) eine erste äußere Oberfläche (30) aufweist, die, vorzugsweise unregelmäßig strukturiert ausgebildet ist und die vorzugsweise eine erste Rauheit Ra zwischen 1µm und 30µm, bevorzugt zwischen 3µm und 10µm, aufweist.

3. Implantat nach einem der vorhergehenden Ansprüche, wobei
der zweite Abschnitt (4) eine zweite äußere Oberfläche (40) aufweist, die glatt ausgebildet ist und die vorzugsweise eine zweite Rauheit Ra kleiner als 1µm, bevorzugt kleiner als 0,2µm, aufweist.

4. Implantat nach einem der vorhergehenden Ansprüche, wobei
das Aufbauteil (10) aus einem metallischen oder aus einem keramischen Werkstoff oder aus einem Kunststoff, vorzugsweises aus Polyetheretherketon, oder aus einem Komposit aus mindestens zwei dieser Werkstoffe ausgebildet ist.

5. Implantat nach einem der vorhergehenden Ansprüche, wobei
der erste, vorzugsweise thermoplastische, Kunststoff einen Elastizitätsmodul aufweist der zwischen 3GPa und 18GPa, bevorzugt zwischen 10GPa und 15GPa, insbesondere zwischen 11GPa und 13GPa, beträgt.

6. Implantat nach einem der vorhergehenden Ansprüche, wobei
der erste Gewindeabschnitt (6) bis zu einer Tiefe von mindestens 55%, bevorzugt von mindestens 65% und insbesondere bevorzugt von mindestens 75% der Länge (300) des ersten Abschnitts (3), in diesen hineinreicht.

7. Implantat nach Anspruch 8, wobei
der erste Gewindeabschnitt (6) dazu ausgebildet ist, nach der Implantation teilweise mit einem zweiten Kunststoff (7) verfüllt zu werden.

8. Implantat nach Anspruch 9, wobei
der erste Gewindeabschnitt (6) nach der Implantation bis zu einer Füllhöhe von mindestens 20%, bevorzugt von mindestens 30% und insbesondere bevorzugt von mindestens 40%, verfüllt ist.

## Claims

1. Bone implant (1) comprising an anchoring part (2) and an body section (10), wherein the anchoring part (2) comprises a basically cylindrical or truncated conical first section (3) with an external thread (32), which is designed to be implanted by means of a rotary motion into a bone, and a second section (4) that is designed to be arranged in the region of the soft tissue, wherein the anchoring part (2) is made of a first biocompatible plastic, in particular, polyetheretherketone, and comprises a recess (5) which is designed to start from a cover surface (42) of the second section (4) and reach to the first section (3) and which comprises an internal thread (60) in a first threaded section (6), which is arranged exclusively in the region of the first section (3) and wherein the body section (10) comprises a second thread section (12), which is designed to be screwed into the first thread section (6) directly in a non-positive-locking manner or only indirectly by means of an adhesive substance in a substance-to-substance manner, thereby being connected.

2. Implantation according to Claim 1, wherein
the first section (3) comprises a first outer surface (30), which is preferably irregularly structured and which preferably has a first roughness Ra between 1 µm and 30 µm, preferably between 3 µm and 10 µm.

3. Implant according to any one of the preceding claims, wherein
the second section (4) comprises a second outer surface (40), which is smooth and which preferably has a second roughness Ra less than 1 µm, preferably less than 0.2 µm.

4. Implant according to any one of the preceding claims, wherein
the body section (10) is made of a metallic or ceramic material or of a plastic, preferably of polyetheretherketone, or of a composite of at least two of these materials.

5. Implant according to any one of the preceding claims, wherein
the first plastic (preferably thermoplastic) has a modulus of elasticity which is between 3GPa and 18GPa, preferably between 10GPa and 15GPa, in particular, between 11GPa and 13GPa.

6. Implant according to any one of the preceding claims, wherein
the first threaded section (6) extends to a depth of at least 55%, preferably of at least 65% and particularly preferably of at least 75% of the length (300) of the first section (3).

7. Implant according to Claim 8, wherein
the first thread section (6) is designed to be partially filled with a second plastic (7) after implantation.

8. Implant according to Claim 9, wherein,
after implantation, the first threaded section (6) is filled to a filling level of at least 20%, preferably of at least 30% and, being particularly preferred, filled to a filling level of at least 40%.

## Revendications

1. Implant osseux (1) comportant une pièce d'ancrage (2) et une pièce structurelle (10), la pièce d'ancrage (2) présentant une première section fondamentalement en forme cylindrique ou tronconique (3) dotée d'un filetage extérieur (32), et qui est conçu pour être implanté par un mouvement rotatif dans un os, et une seconde section (4) qui est conçue pour être disposée au niveau du tissu mou, la pièce d'ancrage (2) étant constituée d'une première matière plastique biocompatible, en particulier de polyéther éther cétone (5), et présentant une échancrure qui est conçue pour aller d'une surface de recouvrement (42) de la seconde section (4) jusque dans la première section (3) et qui est disposée dans une première section filetée (3) qui est disposée exclusivement au niveau de la première section, présente un filetage intérieur (60) , et la pièce structurelle (10) présente une seconde section filetée (12) qui est conçue pour être 32 directement par correspondance mécanique à la première section filetée (6) ou seulement par l'intermédiaire d'une substance adhésive et ainsi connectée.

2. Implant selon la revendication 1, dans lequel
la première section (3) présente une première surface extérieure (30) qui est de préférence structurée irrégulièrement et qui présente de préférence une rugosité Ra de 1 µm à 30 µm, de préférence de 3 µm à 10 µm.

3. Implant selon une des revendications précédentes, dans lequel
la seconde section (4) présente une seconde surface extérieure (40) qui est de conformation plate et qui présente de préférence une seconde rugosité Ra inférieure à 1 µm, en particulier inférieure à 0,2 µm.

4. Implant selon une des revendications précédentes, dans lequel
la pièce structurelle (10) est constituée d'un matériau métallique ou céramique ou d'une matière plastique, de préférence de polyéther éther cétone ou d'un composite d'au moins deux de ces matériaux.

5. Implant selon une des revendications précédentes, dans lequel
la première matière plastique, de préférence thermoplastique, présente un module d'élasticité qui est compris entre 3 GPa et 18 GPa, de préférence entre 10 GPa et 15 GPa, en particulier entre 11 GPa et 13 GPa.

6. Implant selon une des revendications précédentes, dans lequel
la première section filetée (6) rentre jusqu'à une profondeur représentant au moins 55 %, de préférence d'au moins 65 % et très préférentiellement au moins 75 %, de la longueur (300) de la première section (3), dans celle-ci.

7. Implant selon la revendication 8, dans lequel
la première section filetée (6) est conçue pour être remplie partiellement d'une seconde matière plastique (7) après l'implantation.

8. Implant selon la revendication 9, dans lequel
la première section filetée (6) est remplie après l'implantation jusqu'à une hauteur de remplissage d'au moins 20 %, de préférence d'au moins 30 % et très préférentiellement d'au moins 40 %.
